# EUROPÄISCHE PATENTSCHRIFT

(11) **EP 2 746 567 B1**
(45) Veröffentlichungstag und Bekanntmachung des Hinweises auf die Patenterteilung: **27.02.2019**
(21) Anmeldenummer: 13190191.0
(22) Anmeldetag: 25.10.2013
(51) Int. Cl.: F02M 61/18, F16K 1/42, F02M 51/06

(54) **Ventil zum Zumessen von Fluid**
Valve for metering fluid
Vanne pour le dosage d'un fluide

(30) Priorität: 18.12.2012 DE 102012223552
(43) Veröffentlichungstag der Anmeldung: 25.06.2014
(73) Patentinhaber: ROBERT BOSCH GMBH, 70442 Stuttgart (DE)
(72) Erfinder: Kleindl, Michael, 71701 Schwieberdingen (DE); Sebastian, Thomas, 71729 Erdmannhausen (DE); Giessler, Cornelia, 71717 Beilstein (DE)

(56) Entgegenhaltungen:
- WO-A1-2004/065783
- WO-A1-2008/065698
- WO-A1-2008/083509
- WO-A2-87/07334
- FR-A- 981 999
- GB-A- 2 039 993
- US-A- 3 400 440
- US-A- 4 030 668
- US-B1- 6 173 494

## Beschreibung

### Stand der Technik

Die Erfindung geht aus von einer Ventil zum Zumessen von Fluid nach dem Oberbegriff des Anspruchs 1, wobei der für ein strömendes oder fließendes Medium stehende, übergeordnete Begriff Fluid in Übereinstimmung mit der Strömungslehre für Gase und Flüssigkeiten verwendet wird.

Ein bekanntes Einspritzventil für Brennstoffeinspritzanlagen von Brennkraftmaschinen (DE 44 15 850 A1) weist Abspritzöffnungen zum Abspritzen von unter Hochdruck stehendem Brennstoff und eine Ventilnadel zum Schließen und Freigeben der Abspritzöffnungen auf. Die Abspritzöffnungen sind in einem Ventilsitzkörper ausgebildet, der einen den Abspritzöffnungen in Strömungsrichtung des Fluid vorgeordneten Ventilsitz mit Sitzfläche aufweist, die auf einem zu den Abspritzöffnungen sich verjüngenden Konus liegt und mit einem am Ventilnadel befestigten, kugelförmigen Schließkopf einen den Abspritzöffnungen vorgelagerten Dichtsitz bildet. Der Schließkopf wird durch eine an der Ventilnadel angreifende Ventilschließfeder auf die Sitzfläche aufgedrückt. Die Ventilnadel wird von einem elektrischen Aktor gegen die Schließwirkung der Ventilschließfeder betätigt, so dass bei Bestromen des Aktors der Schließkopf mehr oder weniger weit von der Sitzfläche abhebt. Der Aktor ist ein Elektromagnet mit Magnetspule, Magnetkern, Magnetanker und magnetischem Rückschluss. Der Magnetkern ist hohlzylindrisch ausgeführt und mit einem Brennstoffzulauf versehen. Die Magnetspule sitzt auf dem Magnetkern. Der Magnetanker ist auf der Ventilnadel befestigt und in einem vom Ventilsitzkörper endseitig abgeschlossenen Ventilsitzträger axial verschieblich geführt und schließt mit dem Magnetkern einen Arbeitsluftspalt ein.

Beim schnellen Schließen des Ventils nach Wegfall der Aktorbestromung treten infolge der bewegten Masse der Ventilnadel beim ersten Auftreffen des Schließkopfs auf die Sitzfläche des Ventilsitzes sog. Preller auf. Dabei hebt die Ventilnadel mit Schließkopf erneut von der Sitzfläche ab und ein Brennstoffaustritt zu den Abspritzöffnungen hin wird ungewollt freigegeben. Dies führt zu einer unkalkulierbaren Zumessung des Brennstoffs. Bei Direkteinspritzung des Brennstoffs in den Brennraum der Brennkraftmaschine haben solche Preller direkte Auswirkungen auf die Gemischbildung im Brennraum, was infolge unzureichender Verbrennung zu einem erhöhten Schadstoffanfall führt.

Um diese Preller zumindest zu reduzieren, ist bei einem bekannten Brennstoffeinspritzventil (DE 33 14 899 A1) der Magnetanker nicht starr auf der Ventilnadel befestigt, sondern auf der Ventilnadel verschieblich angeordnet. Eine erste Rückstellfeder beaufschlagt die Ventilnadel in Schließrichtung und hält bei unbestromten Elektromagneten die Zumessöffnung geschlossen. Der Magnetanker wird von einer zweiten Rückstellfeder in Hubrichtung so beaufschlagt, dass der Magnetanker in der Ruhestellung an einem an der Ventilnadel angeordneten ersten Anschlag anliegt. Bei Bestromen der Magnetspule wird der Mangetanker in Hubrichtung angezogen und nimmt über den ersten Anschlag die Ventilnadel mit. Bei Wegfall der Bestromung der Magnetspule wird die Ventilnadel mittels der ersten Rückstellfeder in ihre Schließstellung beschleunigt und nimmt über den beschriebenen Anschlag den Magnetanker mit. Sobald der Ventilschließkörper auf dem Ventilsitz auftrifft, wird die Schließbewegung der Ventilnadel abrupt beendet. Die Bewegung des mit der Ventilnadel nicht starr verbundenen Magnetankers setzt sich entgegen der Hubrichtung fort und wird von der zweiten Rückstellfeder aufgefangen, d. h. der Magnetanker schwingt gegen die gegenüber der ersten Rückstellfeder eine wesentlich geringere Federkonstante aufweisende zweite Rückstellfeder durch. Die zweite Rückstellfeder beschleunigt den Anker schließlich erneut in Hubrichtung, so dass die kinetische Energie der Masse der Ventilnadel allmählich abgebaut wird. Nachteilig ist hierbei die komplizierte Bauform, die mehrere einzelne Bauteile erfordert. Die Fertigungstoleranzen der einzelnen Bauteile addieren sich zu einer Gesamttoleranz, die sich nachteilig auf die Schaltpräzision des Ventils und die Genauigkeit der Brennstoffzumessung auswirkt. Ein Ventil mit einer Sitzfläche mit bogenförmiger Kontur zur Erzeugung einer hydraulischen Dämpfung des Ventilglieds ist aus US3400440 A bekannt.

### Offenbarung der Erfindung

Das erfindungsgemäße Ventil zum Zumessen von Fluid mit den Merkmalen des Anspruchs 1 hat den Vorteil, dass durch die gezielte Prägung der Sitzkontur die Aufschlagfläche für den Schließkopf des Ventilglieds an der Sitzfläche vergrößert wird. Dies führt zu einer hydraulischen Dämpfung des Ventilglieds. Dabei wird Energie, die sonst zum Prellen des Ventilglieds führen würde, abgebaut. Zusätzlich wird der stoßartige Aufprall des Ventilglieds beim Ventilschließen gemindert, wodurch ebenfalls die Neigung zum Prellen reduziert wird. Durch die vergrößerte Aufschlagfläche für den Schließkopf wird die Hertzsche Pressung gesenkt und dadurch und in Verbindung mit der reduzierten Aufprallenergie des Ventilglieds ein Verschleiß an Schließkopf und Ventilsitz, der durch die große Anzahl von Schließvorgängen während der Lebensdauer des Ventils entsteht, deutlich reduziert.

Durch die in den weiteren Ansprüchen aufgeführten Maßnahmen sind vorteilhafte Weiterbildungen und Verbesserungen des im Anspruch 1 angegebenen Ventils möglich.

Erfindungsgemäß ist die Prägekontur in der Sitzfläche so ausgebildet, dass der Mittelpunkt des Konturradius auf einer die Achse des Ventilsitzkörpers schneidenden Normalen zur Sitzfläche liegt und gegenüber dem Schnittpunkt von Normale und Achse längs der Normalen versetzt ist. Dadurch wird eine weitgehende Übereinstimmung der Prägekontur in der Sitzfläche und der kugelförmigen Kontur des Schließkopfes in dessen Aufsetzbereich in der Sitzfläche und zudem eine gleiche Gestaltung des einlaufenden und auslaufenden Spalts zwischen Schließkopf und Sitzfläche im Bereich der Prägekontur erzielt, was zu einer besseren Kontaktdruckverteilung führt.

Die Erfindung betrifft ferner ein Verfahren zur Herstellung eines Ventilsitzes nach dem Oberbegriff des Anspruchs 3. Dabei wird durch Einpressen eines Prägestempels in den Ventilsitzkörper in die Sitzfläche die vorstehend beschriebene, bogenförmige Prägekontur eingeprägt. Hierzu wird ein Prägestempel verwendet, an dem ein bogenförmiger Prägebereich ausgearbeitet ist, dessen Außenkontur der Prägekontur entspricht. Der Prägestempel wird axial in den Ventilsitzkörper eingeführt und mittels einer Pressvorrichtung mit seinem Prägebereich in die Sitzfläche des Ventilsitzkörpers eingepresst.

Erfindungsgemäß wird die Außenkontur des Prägebereichs am Prägestempel so gestaltet, dass der Mittelpunkt des Außenkonturradius auf einer die Achse des Prägestempel schneidenden, Normalen zum Prägebereich liegt und gegenüber dem Schnittpunkt von Normalen und Achse längs der Normalen versetzt ist, wobei die Normale im Prägebereich mittig ausgerichtet ist. Eine solche Außenkontur wird vorteilhaft durch eine Ausbildung eines Ellipsoidabschnitts im Prägebereich erhalten.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Figur 1: einen Längsschnitt eines Ventils zum Zumessen von Fluid, schematisiert dargestellt,
- Figur 2: eine vergrößerte Darstellung des Ausschnitts II in Figur 1,
- Figur 3: eine vergrößerte Darstellung des Ausschnitt III in Figur 2,
- Figur 4: eine schematische Darstellung eines Ventilsitzkörpers im Längsschnitt und eines Prägestempels in Seitenansicht zur Erläuterung eines Verfahrens zur Herstellung des Ventilsitzes für das Ventil gemäß Figur 1.

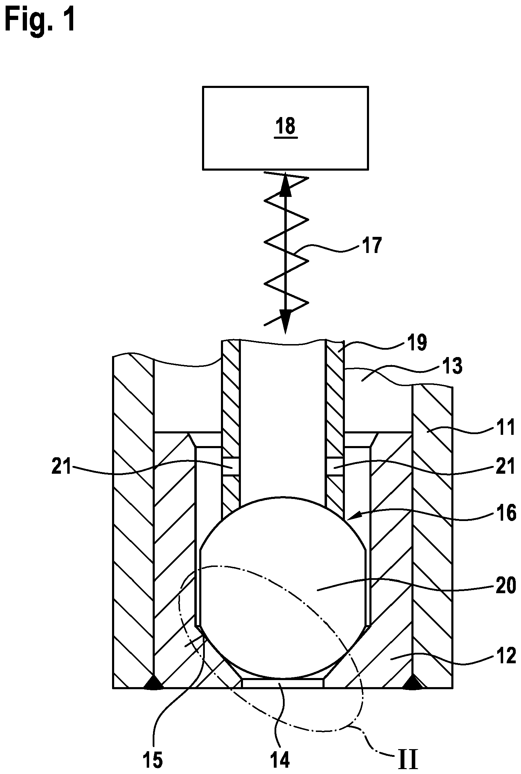

Das in Figur 1 mit seinem zumessseitigen Ende im Längsschnitt schematisch skizzierte Ventil zum Zumessen von Fluid wird beispielsweise als Einspritzventil zum Einspritzen von Kraftstoff in einer Kraftstoffeinspritzanlage von Brennkraftmaschinen oder als Dosierventil zum Einspritzen einer Wasser-Harnstoff-Lösung in den Abgastrakt einer Brennkraftmaschine zwecks Reduktion von Stickoxiden eingesetzt. Es kann jedoch auch Verwendung in einem Gasmotor zum dosierten Zumessen von Verbrennungsgas in dessen Brennraum finden.

Das Ventil weist einen hülsenförmigen Ventilsitzträger 11 auf, der aus einem hier nicht dargestellten Ventilgehäuse herausragt und an seinem freien Ende mit einem Ventilsitzköper 12 abgeschlossen ist. Der Ventilsitzkörper 12 begrenzt eine Ventilkammer 13 im Ventilsitzkörper 12, die mit unter Hochdruck stehendem Fluid gefüllt ist. Der Ventilsitzkörper 12 weist eine Zumessöffnung 14 und einen zur Zumessöffnung 14 hin sich konzentrisch verjüngenden Ventilsitz mit einer am Ventilsitzkörper 12 ausgebildeten Sitzfläche 15 auf. Die Zumessöffnung 14 ist zum Öffnen und Freigeben mittels eines massebehafteten Ventilglieds 16 steuerbar, das zu einer Hubbewegung antreibbar ist. Hierzu ist das Ventilglied 16 von einer in Ventilschließrichtung wirkenden Ventilschließfeder 17 beaufschlagt und von einem Aktor 18 gegen die Rückstell- oder Schließkraft der Ventilschließfeder 17 betätigbar. Der elektrische Aktor 18 kann als Elektromagnet oder als piezoelektrisches oder piezokeramisches Stellglied ausgebildet sein. Das Ventilglied 16 besteht aus einem im Ausführungsbeispiel hohlen Schaft 19 und einem das eine Ende des Schaftes 19 abschließenden Schließkopf 20, der z.B. an den Schaft 19 angeschweißt ist. Am vom Schließkopf 20 abgekehrten Ende des Schaftes 19 greifen die Ventilschließfeder 17 und der elektrische Aktor 18 zur gegensinnigen Beaufschlagung des Ventilglieds 16 an. Der Schließkopf 20 weist einen kugelförmigen Schließkopfbereich auf, der mit der Sitzfläche 15 am Ventilsitzkörper 12 einen Dichtsitz herstellt. Der hohle Schaft 19 weist nahe dem Schließkopf 20 Radialbohrungen 21 auf und steht mit einem hier nicht dargestellten, im Ventilgehäuse ausgebildeten Fluidzulauf in Verbindung, so dass Fluid von dem Fluidzulauf über den hohlen Schaft 19 und den Radialbohrungen 21 in die Ventilkammer 13 gelangt und dort unter Druck an dem Dichtsitz ansteht.

Die Sitzfläche 15 weist eine bogenförmige Prägekontur 22 mit einem Konturradius r1 auf, der größer als der Kugelradius r2 des kugelförmigen Schließkopfbereichs am Schließkopf 20 aber kleiner als das 1,5-fache des Kugelradius r2 ist. Anders ausgedrückt ist das Verhältnis von Konturradius r1 und Kugelradius r2 größer als 1 und kleiner 1,5. Durch diese Prägekontur 22 in der Sitzfläche 15 vergrößert sich die Fläche des Dichtsitzes und somit die Anschlagfläche des Schließkopfes 20 an der Sitzfläche 15, wodurch eine Dämpfung des Aufpralls des Ventilglieds16 auf der Sitzfläche 15 des Ventilsitzes durch das beim Schließen des Ventils zwischen Schließkopf 20 und Ventilsitz sich befindliche Fluidvolumen erfolgt und dadurch Energie des massebehafteten Ventilglieds 16 beim Schließen abgebaut wird, die ansonsten zu sog. Prellern mit nach dem ersten Schließvorgang erfolgenden weiterem Freigeben der Zumessöffnung 14 führen würde.

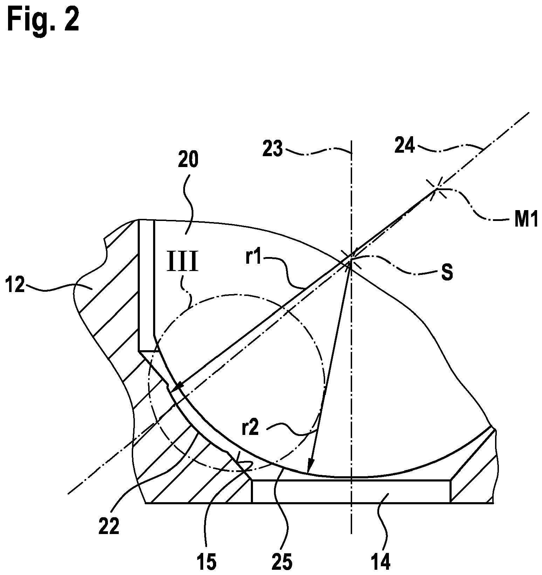

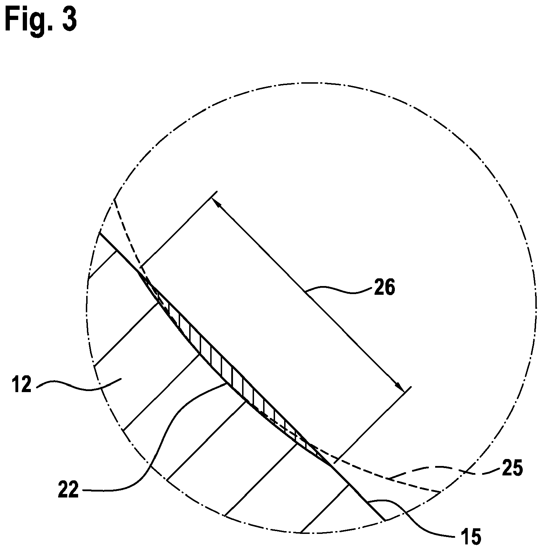

Die Prägekontur 22 in der Sitzfläche 15 kann so ausgeführt sein, dass der Mittelpunkt M1 für den Konturradius r1 auf der Achse 23 des Ventilsitzkörpers 12 liegt. Bevorzugt wird aber die Ausbildung der Prägekontur 22 in der Weise, dass der Konturradius r1 auf einer die Achse 23 des Ventilsitzkörpers 12 schneidenden Normalen 24 zur Sitzfläche 15 liegt und gegenüber dem Schnittpunkt S von Normale 24 und Achse 23 längs der Normalen 24 versetzt ist, wie dies in Figur 2 mit der vergrößerten Darstellung des Ausschnitts II in Figur 1 illustriert ist. Durch die letztgenannte konstruktive Ausbildung der Prägekontur 22 wird die Übereinstimmung der Prägekontur 22 mit der Kugelkontur 25 des Schließkopfabschnitts am Schließkopf 20 deutlich verbessert und die Fläche des Dichtsitzes, also die Anlagefläche der Kugelkontur 25 an der Prägekontur 22, vergrößert. In Figur 3 ist der mit dieser Prägekontur 22 versehene Abschnitt 26 der Sitzfläche 15 vergrößert dargestellt. Der durch die Prägung komprimierte Materialbereich im Ventilsitzkörper 12 ist schraffiert angedeutet.

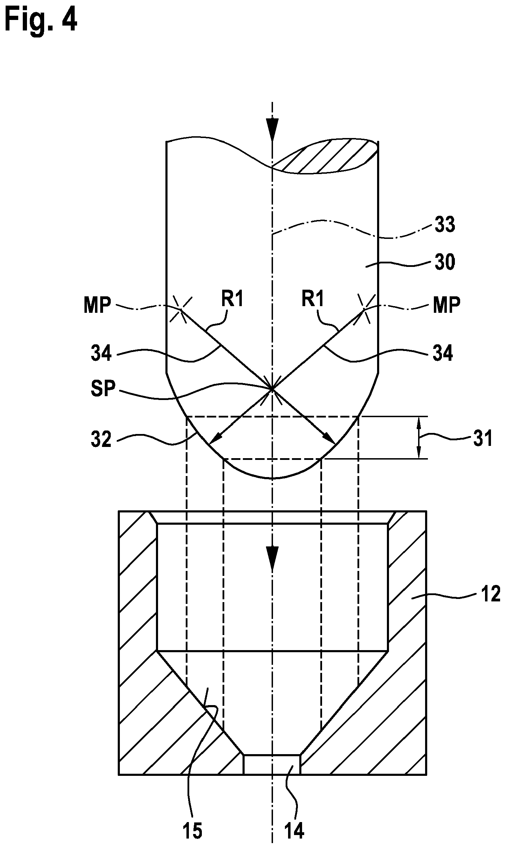

In Figur 4 ist das Verfahren zur Herstellung des beschriebenen Ventilsitzes im Ventilsitzkörper 12 des Ventils schematisch illustriert. In den Ventilsitzkörper 12 ist die Zumessöffnung 14 eingebracht und die am Ventilsitzkörper 12 ausgebildete Sitzfläche 15 mit zur Zumessöffnung 14 hin sich konisch verjüngendem Verlauf eingearbeitet. Mittels eines Prägestempels 30 wird in die Sitzfläche 15 die in Figur 2 und 3 dargestellte bogenförmige Prägekontur 22 mit einem Konturradius r1 eingeprägt, wobei der Konturradius r1 größer als der Kugelradius r2 der Kugelkontur 25 des Schließkopfbereichs am Ventilglied 16 und kleiner als das 1,5-fache des Kugelradius r2 ist. Hierzu wird der Prägestempel 30 mit einem Prägebereich 31 versehen, dessen Außenkontur 32 der Prägekontur 22 entspricht, und der Prägestempel 30 mittels einer Pressvorrichtung in Richtung Zumessöffnung 14 axial in den Ventilsitzkörper 12 eingedrückt.

Die Außenkontur 32 des Prägebereichs 31 am Prägestempel 30 kann so gestaltet sein, dass der Mittelpunkt MP für den Außenkonturradius R1 auf der Achse 33 des Prägestempels liegt. Bevorzugt wird aber eine Gestaltung derart, dass der Mittelpunkt MP für den Außenkonturradius R1 auf einer die Achse 33 des Prägestempels 30 schneidenden, mittigen, d.h. mittig zum Prägereich 31 verlaufenden, Normalen 34 liegt und gegenüber dem Schnittpunkt SP von Achse 33 und Normale 34 längs der Normalen 34 versetzt ist. Diese Außenkontur 32 lässt sich fertigungstechnisch dadurch erreichen, dass die Außenkontur 32 im Prägebereich 33 am Prägestempel 30 die Form eines Ellipsoidabschnitts erhält. In einem solchen Ellipsoidabschnitt liegt der Mittelpunkt MP für den Außenkonturradius R1 auf einer Kugelzone einer Kugel, deren Mittelpunkt im Schnittpunkt SP von Achse 33 des Prägestempels 30 und Normalen 34 liegt.

## Patentansprüche

1. Ventil zum Zumessen von Fluid mit einem Ventilsitzkörper (12), der eine Zumessöffnung (14) und einen zur Zumessöffnung (14) hin sich konisch verjüngenden Ventilsitz mit am Ventilsitzkörper (12) ausgebildeter Sitzfläche (15) aufweist, und mit einem zum Steuern der Zumessöffnung (14) zu einer Hubbewegung antreibbaren, massebehafteten Ventilglied (16) mit einem Schließkopf (20), der über einen kugelförmigen Schließkopfbereich einen Dichtsitz zur Sitzfläche (15) herstellt, wobei die Sitzfläche (15) eine bogenförmige Prägekontur (22) mit einem Konturradius (r1) aufweist, der größer als der Kugelradius (r2) des Schließkopfbereichs am Schließkopf (20) aber kleiner als das 1,5-fache des Kugelradius (r2) ist,
**dadurch gekennzeichnet,**
**dass** die Prägekontur (22) so geformt ist, dass der Mittelpunkt (M1) für den Konturradius (r1) auf einer die Achse (23) des Ventilsitzkörpers (12) schneidenden Normalen (24) zur Sitzfläche (15) liegt und gegenüber dem Schnittpunkt (S) von Normale (24) und Achse (23) längs der Normalen (24) versetzt ist.

2. Verfahren zur Herstellung eines Ventilsitzes in einem Ventilsitzkörper (12), der eine Zumessöffnung (14) und eine am Ventilsitzkörper (12) ausgebildete Sitzfläche (15) mit zur Zumessöffnung (14) hin sich konisch verjüngendem Verlauf aufweist, die mit einem kugelförmigen Schließkopfbereich am Schließkopf (20) eines Ventilglieds (16) eines Ventils zum Zumessen von Fluid einen Dichtsitz bildet, wobei mittels eines Prägestempels (30) in die Sitzfläche (15) eine bogenförmige Prägekontur (22) mit einem Konturradius (r1) eingeprägt wird, der größer als der Kugelradius (r2) des Schließkopfbereichs am Schließkopf (20) des Ventilglieds (16) und kleiner als das 1,5-fache des Kugelradius (r2) ist,
**dadurch gekennzeichnet,**
**dass** das Einprägen der Prägekontur (22) so durchgeführt wird, dass der Mittelpunkt (M1) für den Konturradius (r1) auf einer die Achse (23) des Ventilsitzkörpers (12) schneidenden Normalen (24) zur Sitzfläche (15) liegt und gegenüber dem Schnittpunkt (S) von Normale (24) und Achse (23) längs der Normalen (24) versetzt ist.

3. Verfahren nach Anspruch 2, **dadurch gekennzeichnet, dass** der Prägestempel (30) mit einem Prägebereich (31) versehen wird, dessen Außenkontur (32) der Prägekontur (22) entspricht und dass der Prägestempel (30) in Richtung Zumessöffnung (14) in den Ventilsitzkörper (12) eingepresst wird.

4. Verfahren nach Anspruch 3, **dadurch gekennzeichnet, dass** die Außenkontur (32) des Prägebereichs (31) am Prägestempel (30) so gestaltet wird, dass der Mittelpunkt (MP) für den Außenkonturradius (R1) auf einer die Achse (33) des Prägestempels (30) schneidenden, mittigen Normalen (34) zum Prägebereich (31) liegt und gegenüber dem Schnittpunkt (SP) von Normale (34) und Achse (33) versetzt ist.

5. Verfahren nach Anspruch 4, **dadurch gekennzeichnet, dass** die Außenkontur (32) am Prägestempel (30) im Prägebereich (31) die Form eines Ellipsoidabschnitts erhält.

## Claims

1. Valve for metering fluid, having a valve seat body (12) which has a metering opening (14) and has a valve seat, which valve seat tapers conically towards the metering opening (14) and has a seat surface (15) formed on the valve seat body (12), and having a valve element (16) of high mass which is able to be driven to perform a stroke movement for the control of the metering opening (14) and has a closing head (20) which establishes a sealing seat in relation to the seat surface (15) via a ball-shaped closing head region, wherein the seat surface (15) has an arcuate impressed contour (22) with a contour radius (r1) which is greater than the ball radius (r2) of the closing head region on the closing head (20) but is less than 1.5 times the ball radius (r2),
**characterized**
**in that** the impressed contour (22) is shaped such that the central point (M1) for the contour radius (r1) lies on a normal to the seat surface (15), which normal intersects the axis (23) of the valve seal body (12), and is offset along the normal (24) with respect to the point of intersection (S) of the normal (24) and the axis (23).

2. Method for producing a valve seat in a valve seat body (12) which has a metering opening (14) and has a seat surface (15), which seat surface is formed on the valve seat body (12) and has a profile tapering conically towards the metering opening (14) and forms, together with a ball-shaped closing head region on the closing head (20) of a valve element (16) of a valve for metering fluid, a sealing seat, wherein an arcuate impressed contour (22) with a contour radius (r1) which is greater than the ball radius (r2) of the closing head region on the closing head (20) of the valve element (16) and is less than 1.5 times the ball radius (r2) is impressed into the seat surface (15) by means of an impressing punch (30),
**characterized**
**in that** the impression of the impressed contour (22) is carried out such that the central point (M1) for the contour radius (r1) lies on a normal (24) to the seat surface (15), which normal intersects the axis (23) of the valve seat body (12), and is offset along the normal (24) with respect to the point of intersection (S) of the normal (24) and the axis (23) .

3. Method according to Claim 2, **characterized in that** the impressing punch (30) is provided with an impressing region (31) whose outer contour (32) corresponds to the impressing contour (22), and **in that** the impressing punch (30) is pressed into the valve seat body (12) in the direction of the metering opening (14).

4. Method according to Claim 3, **characterized in that** the outer contour (32) of the impressing region (31) on the impressing punch (30) is shaped such that the central point (MP) for the outer contour radius (R1) lies on a central normal (34) to the impressing region (31), which normal intersects the axis (33) of the impressing punch (30), and is offset with respect to the point of intersection (SP) of the normal (34) and the axis (33).

5. Method according to Claim 4, **characterized in that** the outer contour (32) on the impressing punch (30) in the impressing region (31) acquires the shape of an ellipsoid section.

## Revendications

1. Soupape de dosage de fluide comprenant un corps de siège de soupape (12) qui présente une ouverture de dosage (14) et un siège de soupape se rétrécissant de manière conique vers l'ouverture de dosage (14), avec une surface de siège (15) réalisée sur le corps de siège de soupape (12), et un organe de soupape massif (16) pouvant être entraîné suivant un mouvement de course pour commander l'ouverture de dosage (14), avec une tête de fermeture (20) qui réalise un siège d'étanchéité par rapport à la surface de siège (15) par le biais d'une région de tête de fermeture de forme sphérique, la surface de siège (15) présentant un contour d'empreinte (22) de forme courbe avec un rayon de contour (r1) qui est supérieur au rayon de la sphère (r2) de la région de tête de fermeture au niveau de la tête de fermeture (20) et qui est toutefois inférieur à 1,5 fois le rayon de la sphère (r2),
**caractérisée en ce que**
le contour d'empreinte (22) est formé de telle sorte que le centre (M1) pour le rayon de contour (r1) soit situé sur une normale (24) à la surface de siège (15) coupant l'axe (23) du corps de siège de soupape (12) et soit décalé par rapport au point d'intersection (S) de la normale (24) et de l'axe (23) le long de la normale (24).

2. Procédé de fabrication d'un siège de soupape dans un corps de siège de soupape (12), qui présente une ouverture de dosage (14) et une surface de siège (15) réalisée au niveau du corps de siège de soupape (12), avec une allure se rétrécissant de manière conique vers l'ouverture de dosage (14), qui forme un siège d'étanchéité avec une région de tête de fermeture de forme sphérique au niveau de la tête de fermeture (20) d'un organe de soupape (16) d'une soupape pour le dosage de fluide, un contour d'empreinte de forme courbe (22) étant imprimé au moyen d'un poinçon d'empreinte (30) dans la surface de siège (15), avec un rayon de contour (r1) qui est supérieur au rayon de la sphère (r2) de la région de tête de fermeture au niveau de la tête de fermeture (20) de l'organe de soupape (16) et qui est inférieur à 1,5 fois le rayon de la sphère (r2),
**caractérisé en ce que**
l'impression du contour d'empreinte (22) est réalisée de telle sorte que le centre (M1) pour le rayon de contour (r1) soit situé sur une normale (24) à la surface de siège (15) coupant l'axe (23) du corps de siège de soupape (12) et soit décalé par rapport au point d'intersection (S) de la normale (24) et de l'axe (23) le long de la normale (24).

3. Procédé selon la revendication 2, **caractérisé en ce que** le poinçon d'impression (30) est pourvu d'une zone d'impression (31) dont le contour extérieur (32) correspond au contour d'empreinte (22) et **en ce que** le poinçon d'impression (30) est pressé dans la direction de l'ouverture de dosage (14) dans le corps de siège de soupape (12).

4. Procédé selon la revendication 3, **caractérisé en ce que** le contour extérieur (32) de la zone d'impression (31) sur le poinçon d'impression (30) est configuré de telle sorte que le centre (MP) pour le rayon de contour extérieur (R1) soit situé sur une normale (34) à la région d'impression (31), située centralement, intersectant l'axe (33) du poinçon d'impression (30), et soit décalé par rapport au point d'intersection (SP) de la normale (34) et de l'axe (33).

5. Procédé selon la revendication 4, **caractérisé en ce que** le contour extérieur (32) au niveau du poinçon d'impression (30) dans la région d'impression (31) acquiert la forme d'une portion d'ellipsoïde.
